Europäisches Patentamt

European Patent Office

Office européen des brevets

(19)

(11) Publication number : **0 213 813 B1**

(12) # EUROPEAN PATENT SPECIFICATION

(45) Date of publication of patent specification :
27.02.91 Bulletin 91/09

(51) Int. Cl.$^5$ : **G21C 19/30, G21C 3/34, G21C 3/32, G21C 17/00**

(21) Application number : 86306130.5

(22) Date of filing : 07.08.86

(54) **Nuclear fuel assembly including a debris trap.**

(30) Priority : 08.08.85 US 763737

(43) Date of publication of application :
11.03.87 Bulletin 87/11

(45) Publication of the grant of the patent :
27.02.91 Bulletin 91/09

(84) Designated Contracting States :
BE DE FR GB IT SE

(56) References cited :
EP-A- 0 148 452
EP-A- 0 184 219
EP-A- 0 187 578
DE-A- 2 517 479
FR-A- 1 479 148
FR-A- 2 365 861
FR-A- 2 495 369

(73) Proprietor : **WESTINGHOUSE ELECTRIC CORPORATION**
**Westinghouse Building Gateway Center**
**Pittsburgh Pennsylvania 15235 (US)**

(72) Inventor : **Ferrari, Harry Max**
**144 W. Swissvale Avenue**
**Pittsburgh Pennsylvania 15218 (US)**
Inventor : **Wilson, John Francis**
**3560 Meadowgate Drive**
**Murrysville Pennsylvania 15668 (US)**

(74) Representative : **van Berlyn, Ronald Gilbert**
**23, Centre Heights**
**London, NW3 6JG (GB)**

EP 0 213 813 B1

Jouve, 18, rue Saint-Denis, 75001 PARIS

## Description

The present invention relates generally to nuclear reactors and, more particularly, to a nuclear fuel assembly including a debris trap.

During manufacture and subsequent installation as well as upon the repair of components of the coolant circulation system of a nuclear reactor, great care is taken to assure the removal of debris, such as, for instance, irregularly shaped metal particles and chips resulting from steam generator repair or replacement. Usually, and as described in U.S. patent No. 4,096,032, for example, debris removal operations are performed during functional flow testing of the primary coolant system of the reactor, and they involve the use of filters or the like which are employed during testing to collect the debris and are subsequently removed when testing is completed and before the system is put into service.

However, experience has shown that despite elaborate procedures followed in removing debris, some of it more often than not remains in the system and subsequently, during operation of the latter, becomes entrained in the reactor coolant being circulated. Such debris carried with the coolant flow may cause clogging of flow passages between the fuel rods and, if trapped in fuel-rod support grids, will vibrate against the cladding of the fuel rods and cause fretting wear, eventually perhaps even perforation, of the cladding.

It has been proposed heretofore to alleviate this problem by providing fuel assemblies with debris traps installed therein upstream of the fuel rods. Such debris traps remain in place throughout a reactor fuel cycle and are removed and replaced upon refueling.

It is the principal object of the invention to provide a nuclear fuel assembly with a debris trap which will overcome the problem of fretting wear of fuel rod cladding and, furthermore, is economical to make and to use.

The invention accordingly resides in a nuclear fuel assembly including a plurality of fuel rods each having a cladding tube with a lower end plug, at least a bottom grid disposed above the lower end plugs of the fuel rods and supporting the latter in an organized array, a lower end structure disposed in spaced relationship below said lower end plugs and including means for directing coolant upwards toward said bottom grid, and a debris trap for catching debris entrained in the coolant flowing through the lower end structure and toward the bottom grid, characterized in that said debris trap comprises a substantially non-supporting grid structure which :—(a) extends completely across the coolant flow path between the lower end structure and the bottom grid, (b) is supported from said bottom grid and substantially in alignment with said lower end plugs, and (c) defines cells which are open in the direction of coolant flow and have disposed therein debris-catching structure permitting passage of said coolant and preventing passage of debris entrained in the coolant ; the lower end plug of each fuel rod extending into one of said cells and forming part of said debris-catching structure therein.

The grid structure forming the debris trap preferably is similar in design to the fuel-rod support grid in that it is composed of straps interlaced and interconnected in criss-cross fashion so as to define the said cells, each of the latter being bounded by strap portions forming the respective cell walls. Assuming the cells of the debris trap to be of similar perimetric size and configuration as the cells of the support grid having the respective fuel rods extending therethrough, each debris trap cell is of larger diametral dimension than the fuel-rod end plug received therein, and the debris-catching structure in the cell therefore includes protuberances projecting from the respective cell walls toward the end plug disposed in the cell. The protuberances preferably comprise dimples which are lanced from the strap portions forming the respective cell walls, and which lanced dimples are arched from said cell walls inwardly of the respective cell in planes substantially perpendicular to the direction of coolant flow through the cells ; in other words, the orientation of the arched dimples is such that the dimples are open in the general direction of coolant flow. The protuberances in each cell of the debris-trap grid structure preferably extend in substantially non-supporting relationship with respect to the end plug received in the cell. The grid structure is supported from the bottom grid of the fuel assembly in spaced relationship with respect thereto, preferably by means of hanger straps connected at their opposite ends to said bottom grid and to outer or peripheral straps of the grid structure of the debris trap.

It will be appreciated from the above that with the fuel assembly embodying the invention there will be no fretting wear of fuel rod cladding since debris is trapped before reaching the cladding of the fuel rods, namely, in the grid structure of the debris trap cooperating with the lower end plugs of the fuel rods to catch the debris. In this context, it should be noted that any fretting of debris against the end plugs will create no problem since the end plugs, contrary to the thin-walled fuel rod cladding, are substantially solid. It should also be noted that the invention overcomes the problem of cladding wear and cladding perforation without resorting to a shortening of the stacks of fuel pellets in the fuel rods.

Moreover, utilizing the lower end plugs of the fuel rods as part of the debris-catching structure in the respective grid cells affords a dual advantage in that, first, it reduces the quantity of strap material needed for the debris trap and, furthermore, enables the debris trap to be used and re-used in as many fuel cycles as the fuel assembly itself because the debris collected in the debris trap can be readily removed therefrom during reconstitution of the fuel assembly and when the lower end plugs of the fuel rods are withdrawn from the cells of the debris trap. After removal of the collected debris from the debris trap, the latter is ready for re-use as part of the reconstituted fuel assembly.

A preferred embodiment of the invention will now be described, by way of example only, with reference to the accompanying drawings, in which :

Figure 1 is an elevational view, partly in section, of a nuclear fuel assembly embodying the invention ;

Fig. 2 is an enlarged elevational view, partly in section, of one of the nuclear fuel rods of the fuel assembly shown in Fig. 1 ;

Fig. 3 is an enlarged top plan view, partly in section, of the debris trap of the invention, as taken along line 3-3 of Fig. 1 ;

Fig. 4 is an enlarged fragmentary top plan view of the lower righthand corner portion of the trap as shown in Fig. 3 ; and

Fig. 5 is an enlarged sectional view as taken along line 5-5 of Fig. 4.

In the following description, like reference characters designate like or corresponding parts throughout the several views of the drawings, and terms such as "forward", "rearward", "left", "right", "upwardly", "downwardly", and the like are employed as words of convenience not to be construed as limiting terms.

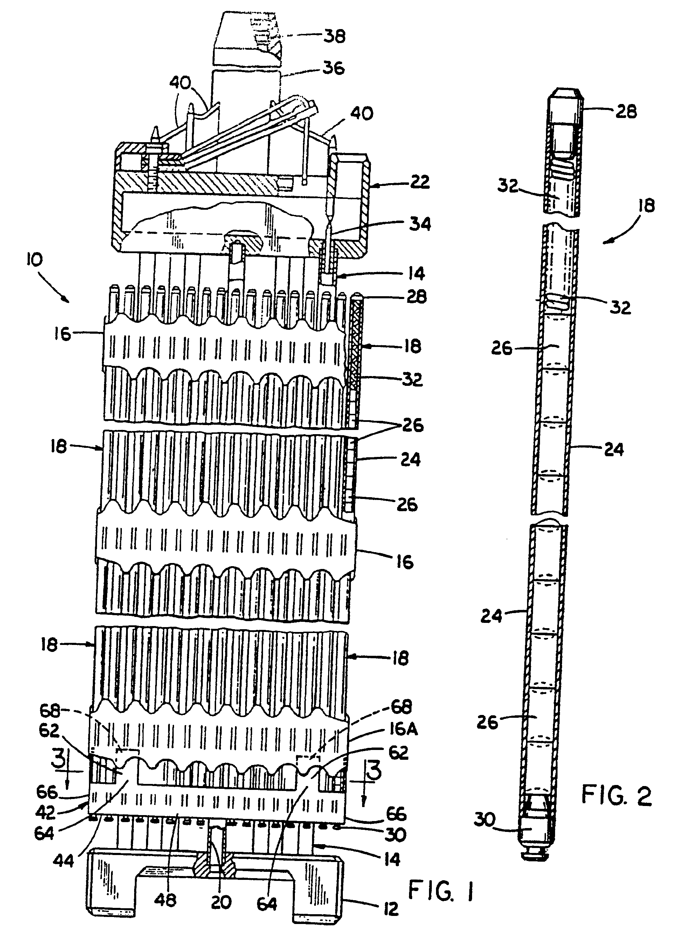

Referring now to the drawings, and particularly to Fig. 1, the fuel assembly shown therein in vertically foreshortened form and generally designated with reference numeral 10 includes a lower end structure or bottom nozzle 12 for supporting the assembly on the lower core plate (not shown) in the core region of a reactor (not shown), several control-rod guide tubes or thimbles 14 which extend upwardly from the bottom nozzle 12, transverse grids 16 axially spaced along the guide thimbles 14, an organized array of elongate fuel rods 18 transversely spaced and supported by the grids 16, an instrumentation tube 20, and an upper end structure or top nozzle 22 attached to the upper ends of the guide thimbles 14. The fuel assembly 10 forms a unitary structure capable of being conventionally handled without damaging the assembly parts.

Each of the fuel rods 18 includes an elongate cladding tube 24 which contains a stack of nuclear fuel pellets 26 composed of fissile material and has its opposite ends hermitically sealed with end plugs 28, 30. A plenum spring 32 disposed between the upper end plug 28 and the stack of pellets 26 maintains the pellets firmly stacked within the tube 24. When in use liquid moderator/coolant such as water, or water containing boron, is pumped upward through the guide thimbles 14 and along the fuel rods 18 of the fuel assembly 10 in order to extract therefrom heat for the production of useful work.

The fission process is controlled by means of control rods 34 reciprocally movable in the guide thimbles 14 located at predetermined positions in the fuel assembly 10. For this purpose, the top nozzle 22 has operatively associated therewith a rod cluster control mechanism 36 having an internally threaded cylindrical member 38 with a plurality of radially extending flukes or arms 40 connected to the control rods 34. The control mechanism 36 is operable to move the control rods 34 in the guide thimbles 14.

As mentioned above, fuel assembly damage may occur due to debris trapped at the bottom or lowest one of the grids 16. As seen from Fig. 1, the bottom grid 16A is disposed and spaced above, and the bottom nozzle 12 is disposed and spaced below, the fuel rod lower end plugs 30. Prior to the invention, debris entrained in the coolant would pass with the coolant through the bottom nozzle 12 and into the bottom grid 16A where it would become entrapped in the cells of the egg-crate-like structure of the grid and there cause fretting wear and perforation of the tubes of the fuel tubes extending through the cells. In order to prevent such fuel rod damage, it is highly desirable to catch coolant-entrained debris before it reaches the bottom grid 16A.

The basic concept underlying the invention is to, in effect, extend the bottom grid 16A by providing a separate short grid-like extension so that the debris will be trapped between the grid-like extension and the lower end plugs 30 of the fuel rods 18.

More specifically, the invention provides a debris trap, generally designated 42, which is supported from the bottom grid 16A and is located between it and the bottom nozzle 12 at the level of the lower end plugs 30 of the fuel rods 18, as illustrated in Fig. 1. The trap 42 is positioned across the path of coolant flow from the bottom nozzle 12 toward the fuel rods 18 so that it will entrap debris carried by the flowing coolant before it reaches the bottom grid 16A of the fuel assembly 10.

As shown in Figs. 1 and 3 to 5, the debris trap 42 is a fuel rod non-supporting grid structure 44 which is generally aligned laterally with the lower end plugs 30 of the fuel rods 18 and is composed of a plurality of inner straps 46 interlaced with each other in crisscross interlocking fashion, and outer straps 48 interconnected with each other at their opposite ends 50 and connected to the ends 52 of the inner straps 46, the outer straps 48 thus defining the perimeter of the grid structure 44. The inner and outer straps 46, 48 together define a multiplicity of cells 54 each of which is open in the longitudinal direction of the fuel assembly, i.e. in the direction of coolant flow. Each of a majority of the cells 54 receives one of the fuel-rod lower end plugs in non-supporting relationship therewith, and each of a minority of the cells 54 receives one of the guide thimbles 14.

More particulanly, pairs of oppositely disposed portions of the inner straps 46 define interior walls 56 of the respective inner ones 54A of the cells 54, and pairs of oppositely disposed portions of the outer straps 48 and of some inner straps 46 define exterior walls 58 and interior walls 56 of the cells 54B along the outer perimeter of the trap 42.

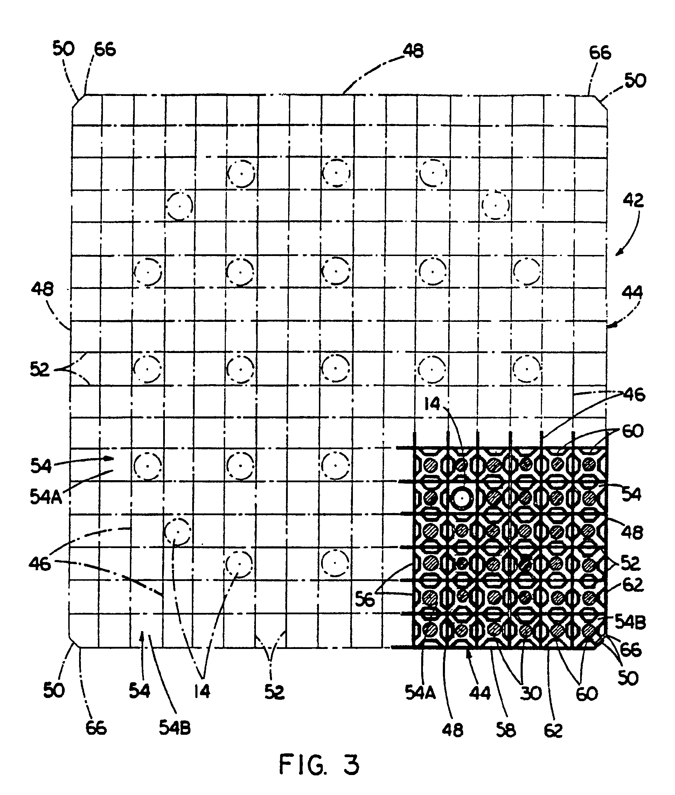

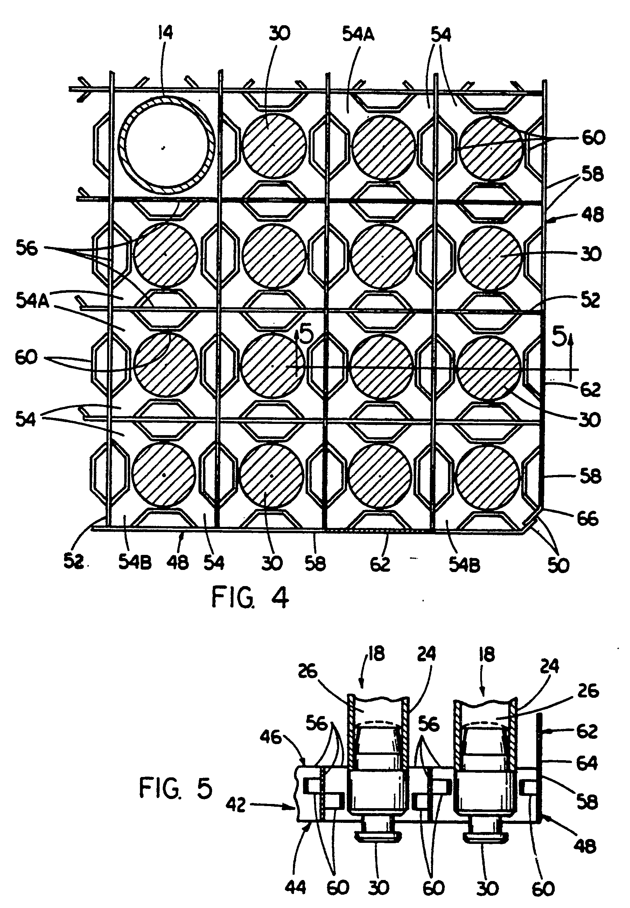

The debris trap 42 includes means defined in each of the cells 54 for catching debris carried into the cells by coolant flowing therethrough past the lower end plugs 30 of the fuel rods. The catching means comprise the lower fuel rod end plugs 30 received in the respective cells 54A, 54B, and projections, preferably in the form of dimples 60 formed on the walls 56, 58 of the respective cells 54A, 54B, in a suitable manner, such as die punching, which protrude from the walls of the cells toward the end plugs 30 disposed in the latter. Each inner-strap portion forming a wall 56 of a cell 54 other than one having a guide thimble 14 extending therethrough (see Fig. 4) has thereon two dimples 60 which protrude from the strap portion, in opposite directions, into the respective cells 54 adjoining each other and sharing the particular strap portion as a wall 56. Each outer-strap portion forming an exterior wall 58 has thereon one dimple 60 which extends into the respective perimeter cell 54B. Each of the dimples 60 is arched and is open in the direction of coolant flow through the associated cell 54. As clearly seen from Figs. 3 to 5, the distance between the dimples 60 extending from each pair of oppositely disposed walls 56, 58 into the respective cell 54 is slightly greater than the diameter of the fuel-rod lower end plug 30 disposed in a non-supporting relationship with respect to the end plug.

The debris trap 42 preferably is supported from the bottom grid 16A by means of hanger straps 62 (see also Fig. 1) attached at their lower ends 64 to the trap structure 44 adjacent the corners 56 thereof and connected at their upper ends 68 to the bottom grid 16A.

With the arrangement as disclosed herein, debris entrained in the reactor coolant will be trapped in the grip structure 44. There, it is likely to be in contact with the lower ens plugs 30 of the fuel rods 18 but any fretting wear resulting therefrom on the end plugs 30 will be harmless and in no event will result in fuel rod failure since, contrary to the thin-walled Zircaloy cladding tubes of the fuel rods, the end plugs of the latter are solid.

## Claims

1. A nuclear fuel assembly (10) including a plurality of fuel rods (18) each having a cladding tube (24) with a lower end plug, (30) at least a bottom grid (16A) disposed above the lower end plugs of the fuel rods and supporting the latter in an organized array, a lower end structure (12) disposed in spaced relationship below said lower end plugs and including means for directing coolant upwards toward said bottom grid, and a debris trap (42) for catching debris entrained in the coolant flowing through the lower end structure and toward the bottom grid, characterized in that said debris trap (42) comprises a substantially non-supporting grid structure (44) which :

(a) extends completely across the coolant flow path between the lower end structure (12) and the bottom grid (16A),

(b) is supported (62) from said bottom grid (16A) and substantially in alignment with said lower end plugs (30), and

(c) defines cells (54) which are open in the direction of coolant flow and have disposed therein debris-catching structure (60) permitting passage of said coolant and preventing passage of debris entrained in the coolant ;

the lower end plug (30) of each fuel rod (18) extending into one of said cells (54) and forming part of said debris-catching structure therein.

2. A nuclear fuel assembly according to claim 1, characterized in that said grid structure (44) is composed of straps (46, 48) interlaced and interconnected in criss-cross fashion so as to define said cells (54), each of the cells being bounded by strap portions forming walls thereof.

3. A nuclear fuel assembly according to claim 2, characterized in that the lower end plug (30) of each fuel rod has a smaller diametral dimension than the cell (54) containing it, said debris-catching structure including protuberances (60) projecting from the walls of each end-plug receiving cell (54) toward the end plug (30) disposed therein.

4. A nuclear fuel assembly according to claim 3, characterized in that the protuberances (60) comprise dimples which are lanced from the strap portions forming the respective cell walls (56, 58) and arched therefrom inwardly of the respective cells in planes substantially perpendicular to the direction of coolant flow through the cells (54).

5. A nuclear fuel assembly according to claim 3 or 4, characterized in that each strap portion forming a wall (56) between two adjoining end-plug receiving cells (54) has thereon two of said protuberances (60), said two protuberances projecting from said strap portion in opposite directions and each into a different one of the two adjoining cells.

6. A nuclear fuel assembly according to claim 3, 4 or 5, characterized in that the protuberances (60) in each end-plug receiving cell (54) are in substantially non-supporting relationship with respect to the end plug (30) received in the cell.

7. A nuclear fuel assembly according to any one of the preceding claims, characterized in that said grid structure (44) is supported from said bottom grid (16A) in spaced relationship with respect thereto.

8. A nuclear fuel assembly according to claim 7, characterized in that said straps (46, 48) comprise inner straps (46) interlaced in said criss-cross fashion, and outer straps (48) defining the perimeter of said grid structure (44), said outer straps being interconnected with each other at the opposite ends (50) thereof and being interconnected with the inner straps at their opposite ends, and said grid structure (44) being supported from said bottom grid (16A) by means of hanger straps (62) connected to and extending between the bottom grid and said outer straps (48) of said grid structure (44).

9. A nuclear fuel assembly according to claim 8, characterized in that the interconnected ends of said outer straps (48) define corners (66) of said grid structure (44), said hanger straps (62) being connected to the grid structure at the respective corners (66) thereof.

**Ansprüche**

1. Kernbrennsatz (10) mit einer Vielzahl von Brennstäben (18), von denen jeder ein plattiertes Rohr (24) mit einem unteren Endpfropfen (30) aufweist, mindestens ein Bodengitter (16A) oberhalb der unteren Endpfropfen der Brennstäbe angeordnet ist und diese in einer gegliederten Anordnung trägt, im Abstand unterhalb der unteren Endpfropfen eine untere End-Konstruktion (12) vorgesehen ist, die Einrichtungen aufweist, welche Kühlmittel nach oben gegen das Bodengitter richtet, und eine Schlamm-Auffangschale vorgesehen ist, um den von dem durch die untere End-Konstruktion und gegen das Bodengitter fließende Kühlmittel mitgenommenen Schlamm aufzufangen, **dadurch gekennzeichnet**, daß die Schlamm-Auffangschale (42) eine im wesentlichen nicht tragende Gitterstruktur (44) aufweist

(a) die sich vollständig über den Strömungweg des Kühlmittels zwischen der unteren End-Konstruktion (12) und dem Bodengitter (16A) erstreckt,

(b) die vom Bodengitter (16A) getragen und im wesentlichen mit den unteren Endpfropfen (30) ausgerichtet ist, und

(c) die Zellen (54) begrenzt, welche in Richtung des Kühlmittelflusses offen sind und in denen Schlamm auffangende Gefüge vorgesehen sind, die das Kühlmittel durchlassen, nicht jedoch den von diesem mitgenommenen Schlamm ;

der untere Endpfropfen (30) eines jeden Brennstabes (18) in eine der Zellen (54) ragt und Teil der Schlamm auffangenden Struktur bildet.

2. Kernbrennsatz nach Anspruch 1, dadurch gekennzeichnet, daß die Gitterstruktur (44) aus Stegen (46, 47) besteht, die verschränkt und untereinander kreuz und quer laufend verbunden sind, derart, daß sie die Zellen (54) begrenzen, wobei jede Zelle durch Wände bildende Stegteile umgeben ist.

3. Kernbrennsatz nach Anspruch 2, dadurch gekennzeichnet, daß der untere Endpfropfen (30) eines jeden Brennstabes eine kleinere diametrale Abmessung hat als die ihn aufnehmende Zelle (54), die den Schlamm auffangende Einrichtung Ausstülpungen (60) aufweist, die von den Wänden einer jeden, einen Endpfropfen aufnehmenden Zelle, gegen den Endpfropfen gerichtet, abstehen.

4. Kernbrennsatz nach Anspruch 3, dadurch gekennzeichnet, daß die Ausstülpungen (60) Vertiefungen aufweisen, die von den die entsprechenden Zellwände (56, 58) bildenden Stegabschnitten lanzettförmig nach innen von den entsprechenden Zellen gewölbt sind, und zwar in ebenen, die im wesentlichen senkrecht zur Richtung es Kühlmittelflusses durch die Zellen (54) liegen.

5. Kernbrennsatz nach Anspruch 3 oder 4, dadurch gekennzeichnet, daß jeder Stegabschnitt, der zwischen zwei anliegenden, Endpfropfen aufnehmenden Zellen (54) eine Wand bildet, zwei der Ausstülpungen (60) aufweist, die vom Stegabschnitt in entgegengesetzten Richtungen abstehen und jede in eine andere der beiden anliegenden Zellen ragt.

6. Kernbrennsatz nach Anspruch 3, 4 oder 5, dadurch gekennzeichnet, daß die Ausstülpungen (60) in jeder, einen Endpfropfen aufnehmenden Zelle (54) im wesentlichen in nicht-tragender Beziehung zu dem von der Zelle aufgenommenen Endpfropfen stehen.

7. Kernbrennsatz nach einem der vorhergehenden Ansprüche, dadurch gekennzeichnet, daß die Gitterstruktur (44) vom Bodengitter (16A) im Abstand von diesem gestützt ist.

8. Kernbrennsatz gemäss Anspruch 7, dadurch gekennzeichnet, dass die Stege (46, 48) aus inneren Stegen (46) bestehen, die in geflochtener Weise eingefügt sind, und äusseren Stegen (48) bestehen, welche den Umfang der Gitterstruktur (44) bilden, wobei die äusseren Stege an entgegengesetzen Enden (50) miteinander verbunden sind und mit den inneren Stegen an den entgegengesetzten Enden verbunden sind, und die Gitterstruktur (44) durch besagtes Bodengitter (16A) getragen wird über Haltestege (62), welche an dem Bodengitter befestigt sind und zu den äusseren Stegen (48) der Gitterstruktur (44) verlaufen.

9. Kernbrennsatz gemass Anspruch 8, dadurch gekennzeichnet, das die miteinander verbundenen Enden der äusseren Stege (48) Ecken (66) der Gitterstruktur (44) bilden, wobei die Haltestege (62) mit der Gitterstruktur mit diesen Ecken (66) verbunden sind.

**Revendications**

1. Assemblage de combustible nucléaire (10) comprenant unepluralité de barres de combustible (18) ayant chacune un tube de gainage (24) avec un bouchon terminal inférieur (30), au moins une grille inférieure (16A) disposée au-dessus des bouchons terminaux inférieurs des barres de combustible et supportant ces dernières en une rangée organisée, une structure terminale inférieure (12) disposée de façon espacée sous lesdits bouchons terminaux inférieurs et comprenant des moyens pour diriger le fluide de refroidissement vers le haut vers ladite grille inférieure, et un piège à débris (42) pour attraper les débris entraînés dans le fluide de refroidissement circulant à travers la structure terminale inférieure et vers la grille inférieure, caractérisé en ce que ledit piège à débris (42) comprend une structure de grille (44) sensiblement non porteuse qui :

(a) s'étend complètement en travers du circuit d'écoulement du fluide de refroidissement entre la structure terminale inférieure (12) et la grille inférieure (16A),

(b) est supportée (62) depuis ladite grille inférieure (16A) et sensiblement en alignement avec lesdits bouchons terminaux inférieurs (30), et

(c) définit des cellules (54) qui sont ouvertes dans la direction de l'écoulement du fluide de refroidissement et comprennent une structure (60) de retenue des débris qui est disposée au-dedans ce qui permet le passage dudit fluide de refroidissement et empêche le passage de débris entraînés dans le fluide de refroidissement ;

le bouchon terminal inférieur (30) de chaque barre de combustible (18) s'étendant dans l'une desdites cellules (54) et faisant partie de ladite structure de retenue de débris qui se trouve au-dedans.

2. Assemblage de combustible nucléaire selon la revendication 1, caractérisé en ce que ladite structure de grille (44) est composée de bandes (46, 48) entrelacées et reliées entre elles de façon entrecroisée de manière à définir lesdites cellules (54), chacune des cellules étant limitée par des parties de bande formant les parois de celles-ci.

3. Assemblage de combustible nucléaire selon la revendication 2, caractérisé en ce que le bouchon terminal inférieur (30) de chaque barre de combustible a une dimension de diamètre inférieure à la cellule (54) qui le contient, ladite structure de retenue de débris comprenant des protubérances (60) dépassant des parois de chaque cellule (54) recevant un bouchon terminal vers le bouchon terminal (30) placé dans celle-ci.

4. Assemblage de combustible nucléaire selon la revendication 3, caractérisé en ce que les protubérances (60) comprennent des bosses qui dépassent des parties de bande formant les parois (56, 58) des cellules respectives et sont arquées depuis celles-ci vers l'intérieur des cellules respectives dans des plans sensiblement perpendiculaires à la direction de l'écoulement du fluide de refroidissement à travers les cellules (54).

5. Assemblage de combustible nucléaire selon la revendication 3 ou 4, caractérisé en ce que chaque partie de bande formant une paroi (56) entre deux cellules contiguës (54) logeant un bouchon terminal porte deux desdites protubérances (60), lesdites deux protubérances dépassant de ladite partie de bande dans des directions opposées et chacune dans une cellule différente des deux cellules contiguës.

6. Assemblage de combustible nucléaire selon la revendication 3, 4 ou 5, caractérisé en ce que les protubérances (60) dans chaque cellule (54) logeant un bouchon terminal sont en relation sensiblement non porteuse par rapport au bouchon terminal (30) logé dans la cellule.

7. Assemblage de combustible nucléaire selon l'une quelconque des précédentes revendications, caractérisé en ce que ladite structure de grille (44) est supportée à partir de ladite grille inférieure (16A) de façon espacée par rapport à celle-ci.

8. Assemblage de combustible nucléaire selon la revendication 7, caractérisé en ce que lesdites bandes (46, 48) comprennent des bandes intérieures (46) entrelacées de ladite façon entrecroisée, et des bandes extérieures (48) définissant le périmètre de ladite structure de grille (44), lesdites bandes extérieures étant reliées les unes aux autres aux extrémités opposées (50) de celles-ci et étant reliées aux bandes intérieures à leurs extrémités opposées, et ladite structure de grille (44) étant supportée à partir de ladite grille inférieure (16A) au moyen de bandes de suspension (62) reliées à et s'étendant entre la grille inférieure et lesdites bandes extérieures (48) de ladite structure de grille (44).

9. Assemblage de combustible nucléaire selon la revendication 8, caractérisé en ce que les extrémités reliées entre elles desdites bandes extérieures (48) définissent des coins (66) de ladite structure de grille (44), lesdites bandes de suspension (62) étant reliées à la structure de grille aux coins respectifs (66) de cel-le-ci.

FIG. 1

FIG. 2

FIG. 3

FIG. 4

FIG. 5